# EUROPEAN PATENT SPECIFICATION

(11) **EP 1 606 470 B1**
(45) Date of publication and mention of the grant of the patent: **16.01.2008**
(21) Application number: 04716386.0
(22) Date of filing: 02.03.2004
(51) Int. Cl.: E04D 13/147

(54) **COVERING MATERIAL FOR ROOFS**
ABDECKMATERIAL FÜR DÄCHER
MATERIAU DE COUVERTURE POUR TOITURES

(30) Priority: 03.03.2003 NL 1022827
(43) Date of publication of application: 21.12.2005
(73) Proprietor: Ubbink B.V., 6980 AA Doesburg (NL)
(72) Inventor: VAN SCHELLEBEEK, Dirk, Johannes, NL-6715 LK Ede (NL)
(74) Representative: Nederlof, Etienne C.
(86) International application number: PCT/NL2004/000155
(87) International publication number: WO 2004/083555

(56) References cited:
- EP-A- 0 420 747
- EP-A- 0 566 496
- EP-A- 1 096 077
- WO-A-90/05223
- WO-A-92/08022
- NL-A- 8 902 798

## Description

The invention relates to a covering material for roofs, particularly for transitions between different construction parts in roofs.

It is known to use lead or strips of lead-substituting material at the location of the transitions in roof structures. There are such transitions in the connection of skylights, dormer windows or chimneys (lead flashings) with the actual roof covering, such as a tile roof.

Lead has been used of old because of its availability. However, it has the drawback that in course of time it deteriorates, ruptures and has to be replaced, and making it connect fluently requires a lot of effort.

In the past may kinds of lead-substituting strip materials have been suggested, for instance see Dutch patent application 86.03223, Dutch patent 191.457 of the applicant and International patent application WO 02/28635.

WO 92/08022 A discloses a covering material according to the preamble of claim 1.

Although these lead-substituting materials approach the properties of lead to a certain extent, they still do not constitute a material that is capable of actually and in the optimal sense substituting lead.

It is an object of the invention to provide a lead-substituting covering material.

It is a further object of the invention to provide a lead-substituting covering material that is durable.

It is a further object of the invention to provide a lead-substituting covering material that is easy to arrange.

A further object of the invention is to provide a lead-substituting covering material that is easy to manufacture.

A further object of the invention is to provide a lead-substituting covering material that offers an optimal sealing against water.

The invention provides a covering material for roofs according to claim 1. In this composite material the metal layer constitutes a plastic yet reinforcing element and the bitumen the sealing element, that has large penetration resistance -and thus is durable-, is capable of tight adhesion to the metal gauze -and thus is able to form a durable structure with the metal gauze-, as well as is able to provide a -proven- proper sealing. The bitumen furthermore is a cheap material, that is easily liquefied and can then be joined with the gauze in a continuous (casting) process. Moreover the bitumen can easily be separated from the gauze later on in view of recycling.

Preferably the bitumen is a polymer bitumen, preferably a thermoplastic polymer-modified polymer bitumen or a thermoplastic synthetic material-modified polymer bitumen.

It is particularly preferred that the polymer bitumen is modified with a thermoplastic elastomer (TPE), particularly SBS-modified or -in connection with its UV-resistance- SEBS-modified polymer bitumen. Preferably the content of SBS or SEBS is approximately 10-30 % by weight, particularly approximately 20 % by weight.

Such bitumen material has a shape memory, is highly stretchable (in the order of hundreds of %) and has a large penetration resistance.

In a manner known per se, the metal gauze is manufactured from a metal plate that is cut in at the location of the meshes to be formed and which is subsequently stretched for transforming the cut-ins into meshes bounded by metal strips, while having the metal strips tilt from and with respect to the main plane of the metal plate. It is particular that one according to the invention at at least one of the main planes of the metal gauze the edges of the tilted metal strips present at that location are flattened, in particular to form surfaces that are parallel to the main planes. Thus without affecting the adhesion between the metal gauze and the bituminous material it is prevented that the metal gauze cuts in too much into the bituminous material and moreover a lower structure height of the covering material can be realised, while maintaining its properties.

Preferably the edges of the tilted metal strips present at both main planes of the metal gauze are flattened, in particular to form surfaces that are parallel to the main planes, as a result of which gaining in structure height is further increased.

Preferably the metal gauze is embedded at least up to its surface in the bituminous material at least at one side, preferably at both sides, so that on that/those side(s) damage or tearing of the material, but also injuring the workman placing the material, is prevented.

In a further embodiment of the covering material according to the invention a foil is arranged on at least one of the main planes, particularly a foil having fire-resistant, UV-resistant and/or colour-providing properties. Sprinkling the covering material can then be dispensed with.

Preferably the bituminous material is tightly adhered to the metal gauze, particularly by casting.

Preferably the metal gauze consists of aluminium.

The covering material of the invention can be manufactured by a method, wherein the metal gauze is placed as a layer on a closing substrate, bituminous material in liquid condition is cast onto the layer of metal gauze, the liquid bituminous material fills the meshes of the metal gauze and forms a contiguous upper layer on the metal gauze, the upper layer is levelled and the bituminous material is left to solidify. In this way the covering material according to the invention can easily and reliably be manufactured. By casting and letting the liquid bituminous material solidify a tight connection between the metal and the bituminous material is realised.

A foil having the aforementioned properties can be arranged on the solidifying upper layer, that is still hot.

When being manufactured the metal gauze can advantageously be placed on a preferably metal transport surface. Thus when casting the bituminous material a mould bottom is provided. The metal transport surface may also serve as cooler to the solidifying bitumen. The transport surface may be provided with a non-adhesive layer, for instance a suitable foil or teflon, in order to prevent undesirable adhesion to the mould bottom, and/or transport surface.

In the method according to the invention preferably use is made of the aforementioned metal gauze, preferably having the aforementioned flattened edges.

The invention will be elucidated on the basis of an exemplary embodiment shown in the attached drawings, in which:
Figure 1A shows a cross-section of a metal gauze for use in a covering material according to the invention, prior to treatment;
Figure 1B shows a top view if the metal gauze of figure 1A;
Figure 2 shows the metal gauze according to figures 1A and 1B, after treatment;
Figure 3 is a schematic view of a device for manufacturing an embodiment of covering material according to the invention;
Figure 4 shows a cross-section of covering material manufactured using the device of figure 3; and
Figure 5 shows an application possibility of the covering material according to the invention.

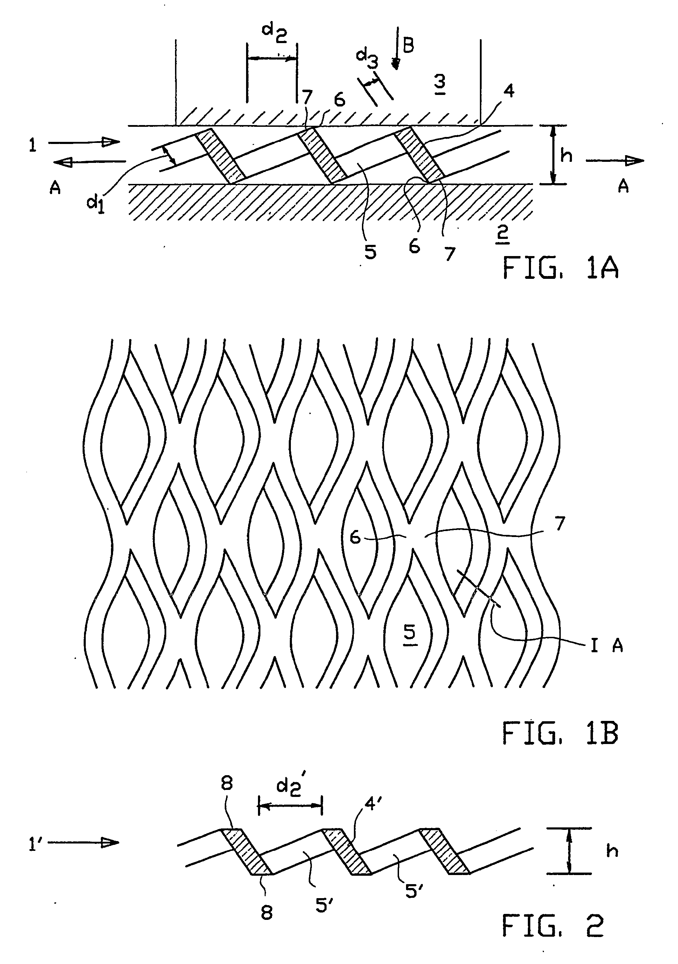

The metal gauze 1 shown in figures 1A and 1B is known per se, and commercially available, and usually made of aluminium plate, in which transverse rows of short cut-ins have been made, the one row offset with respect to the next row. Subsequently, in opposite longitudinal direction A the initial plate is pulled apart, the aluminium areas 4 between the cut-in tilt and the cut-ins will by approximation form diamond-shaped apertures 5. Thus the metal gauze 1 is built up from strips 4 of aluminium that are formed as one unity with each other, which strips in between them define apertures 5. In this example the dimensions shown d1, d2, d3 may be 1.5, 2.7 and 0.8 mm respectively, and the height h 2.3 mm, wherein the height h is defined between the sharp tips 7, oriented to both sides, of the upper and lower edges 6.

The aluminium gauze is tempered in a manner known per se in a heat treatment (approximately 300°C or higher) to give the gauze high plastic properties.

Figure 1 A schematically shows that the metal gauze 1, in the treatment according to the invention is flattened between a fixed stamp 2 and a movable stamp 3, which is able to press in direction B.

Its result is shown in figure 2, with metal gauze 1', of which the tip areas 7 situated on both sides have been flattened into flat areas 8 oriented parallel to the main extension of the metal gauze. Here the apertures 5 have been slightly reduced (d2 may for instance have become 2.5 mm), but the height h' is considerably reduced, in this example for instance 1.8 mm.

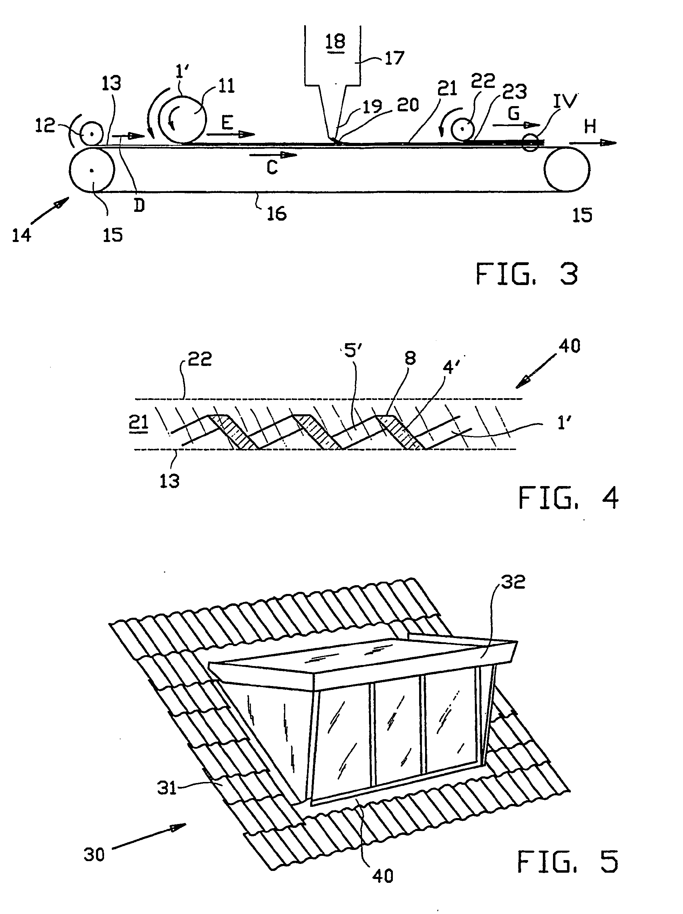

The thus flattened stretch metal gauze 1' may be supplied on a roll to the device shown in figure 3 for manufacturing covering material 40 (see figure 4).

The device 10 shown in figure 3 may thus comprise a roll 11 of stretch metal gauze 1', which is placed above a conveyor 14, which conveyor 14 in this case comprises one or more driven rollers 15 and a closed belt 16, which circulates in the direction C.

At the upstream end of the upper course of the belt 16 a roll 12 of thin foil 13 is positioned, which foil in this example is used for the prevention of adhesion of bituminous material yet to be discussed onto the belt 16. Alternatively the belt 16 may be made of bitumen repellent material, such as teflon.

Downstream of the position for the roll 11 of stretch metal gauze 1' a supply 17 for bituminous material 18 in liquid condition is positioned, having a lower outlet opening 19, which at the downstream side is provided with a leveller 20, which can be adjusted as to height with respect to the belt 16.

Downstream of the supply device 17 for bituminous material 18 a second roll 22 of foil is positioned, which foil 23 is able to provide additional properties, such as colour, UV-resistance, fire-retarding properties or another function to the covering material to be manufactured.

When manufacturing first a layer of foil 13 is discharged in the direction D on the belt 16, and subsequently metal gauze 1' is discharged onto it in the direction E. The metal gauze 1' is kept flat during conveyance on the belt 16. The apertures 5' in the metal gauze 1' form cavities, and so do the areas between the foil 13 and the apertures 5' and the areas above it, which subsequently from the outlet opening 19 are filled with liquid bitumen, that is able to level out of its own accord.

The bitumen material 21, which in this example may be SEBS-modified bitumen, having a content of SEBS of 20% by weight, fills the aforementioned cavities/holes up to in the lower surface of the metal gauze 1'. Depending on the wanted thickness of the bitumen layer above the flattened surfaces 8 situated on top, the height of the leveller 20 is adjusted. The thickness of the bitumen material above the upper surfaces 8 may for instance be 0.5-1 mm, particularly in the order of half the height h' of the flattened stretch gauze material 1' (see figure 4). The gauze 1' is now embedded in the bitumen, at the lower side to the lower surface of the gauze and at the upper side to above the upper surface of the gauze.

On top of the layer of bituminous material the upper foil 23 is discharged in the direction G, which foil adheres to the still soft and warm bituminous material 21.

The covering material 40 thus realised is discharged in the direction H, and can be stored on a roll.

The foil 13 can be removed after manufacturing or before use.

The covering material 40 is particularly suitable to be used instead of lead on roofs, for instance in the situation shown in figure 5, where a dormer window arrangement 30 is shown, having a tile roof 31 and a dormer window 32, at the lower edge of which watertight connection to the undulatory tile roof 31 is realised using a strip of the covering material 40, in a manner similar to a lead flashing or counter flashing.

The covering material 40 is tough, yet plastically deformable, wherein hardly any recoil strength is present. The aluminium stretch metal gauze 1', that has been tempered, shows so-called dead-fold behaviour. The fitter can effortlessly bring the covering material into the wanted fittingly connecting shape. The material retains said given shape.

## Claims

1. Covering material for roofs, comprising a metal layer (1) provided with apertures (5) as well as a layer of bituminous material (21), which is arranged at at least one side of the metal layer (1) and extends through the apertures (5), **characterized in that** the metal layer (1) is formed by a stretch metal gauze (1) that is manufactured from a metal plate that is cut in at the location of the meshes to be formed and which is subsequently stretched for transforming the cut-ins into meshes bounded by metal strip (4), while having the metal strip (4) tilt from and with respect to the main plane of the metal plate, wherein at at least one of the main planes of the metal gauze (1) the edges of the tilted metal strips (4) present at that locations are flattened to form surfaces (8) that are parallel to the main planes, wherein the metal gauze (1) is submitted to a tempering treatment for plastic deformability.

2. Covering material according to claim 1, wherein at both main planes of the metal gauze (1) the edges of the tilted metal strips (4) present at that location are flattened to form surfaces that are parallel to the main planes.

3. Covering material according to claim 1 or 2, wherein the bituminous material (21) is SBS-modified or SEBS-modified bitumen.

4. Covering material according to claim 3, wherein the content of SBS or SEBS is approximately 10 - 30% by weight.

5. Covering material according to claim 4, wherein the content of SBS or SEBS is approximately 20% by weight.

6. Covering material according to any one of the preceding claims, wherein the metal gauze (1) at least at one side is embedded at least up to its surface in the bituminous material (21).

7. Covering material according to claim 6, wherein the metal gauze (1) at least at both sides is embedded at least up to its surface in the bituminous material (21).

8. Covering material according to any one of the preceding claims, wherein a foil is arranged on at least one of the main planes, particularly a foil having fire-resistant, UV-resistant and/or colour-providing properties.

9. Covering material according to any one of the preceding claims wherein the bituminous material (21) is tightly adhered to the metal gauze (1), particularly by casting.

10. Covering material according to any one of the preceding claims, wherein the metal gauze (1) consists of aluminium.

## Patentansprüche

1. Abdeckmaterial für Dächer, umfassend eine mit Löchern (5) versehene Metallschicht (1) sowie eine Schicht aus einem bituminösem Material (21), das auf wenigstens einer Seite der Metallschicht (1) angeordnet ist und sich über die Löcher (5) erstreckt, **dadurch gekennzeichnet, dass** die Metallschicht (1) durch eine Stretchmetallgaze (1) gebildet wird, die aus einer Metallplatte hergestellt wird, die an der Stelle der zu bildenden Maschen eingeschnitten und anschließend gedehnt wird, so dass die Einschnitte in Maschen umgewandelt werden, die durch Metallstreifen (4) verbunden sind, während der Metallstreifen (4) aus der Hauptebene der Metallplatte und in Bezug dazu gekippt wird, wobei an wenigstens einer der Hauptebenen der Metallgaze (1) die an diesen Stellen vorhandenen Kanten der gekippten Metallstreifen (4) abgeflacht werden, so dass sie Flächen (8) bilden, die parallel zu den Hauptebenen sind, wobei die Metallgaze (1) für die plastische Verformbarkeit einer Temperungsbehandlung unterworfen wird.

2. Abdeckmaterial nach Anspruch 1, wobei an beiden Hauptebenen der Metallgaze (1) die an dieser Stelle vorhandenen Kanten der gekippten Metallstreifen (4) abgeflacht sind, so dass sie Flächen bilden, die parallel zu den Hauptebenen sind.

3. Abdeckmaterial nach Anspruch 1 oder 2, wobei das bituminöse Material (21) SBS-modifiziertes oder SEBS-modifiziertes Bitumen ist.

4. Abdeckmaterial nach Anspruch 3, wobei der Gehalt an SBS oder SEBS ungefähr 10 bis 30 Gewichtsprozent beträgt.

5. Abdeckmaterial nach Anspruch 4, wobei der Gehalt an SBS oder SEBS ungefähr 20 Gewichtsprozent beträgt.

6. Abdeckmaterial nach einem der vorherigen Ansprüche, wobei die Metallgaze (1) auf wenigstens einer Seite wenigstens bis zu ihrer Oberfläche in dem bituminösen Material (21) eingebettet ist.

7. Abdeckmaterial nach Anspruch 6, wobei die Metallgaze (1) wenigstens auf beiden Seiten wenigstens bis zu ihrer Oberfläche in dem bituminösen Material (21) eingebettet ist.

8. Abdeckmaterial nach einem der vorherigen Ansprüche, wobei eine Folie auf wenigstens einer der Hauptebenen angeordnet ist, insbesondere eine Folie, die Feuerbeständigkeit, UV-Beständigkeit und/oder farbgebende Eigenschaften aufweist.

9. Abdeckmaterial nach einem der vorherigen Ansprüche, wobei das bituminöse Material (21) dicht auf die Metallgaze (1) geheftet wird, insbesondere durch Aufgießen.

10. Abdeckmaterial nach einem der vorherigen Ansprüche, wobei die Metallgaze (1) aus Aluminium besteht.

## Revendications

1. Matériau de couverture pour les toitures, comprenant une couche de métal (1) munie d'ouvertures (5) ainsi qu'une couche de matière bitumineuse (21), qui est disposée sur au moins une face de la couche de métal (1) et s'étend à travers les ouvertures (5), **caractérisé en ce que** la couche de métal (1) est formée par une gaze métallique d'étirement (1) fabriquée à partir d'une plaque métallique qui est coupée à l'endroit des mailles à former et qui est ultérieurement étirée pour transformer les coupes en mailles, reliées par des bandes métalliques (4), tout en ayant la bande métallique (4) inclinée par rapport au plan principal de la plaque métallique, où, au niveau d'au moins un des plans principaux de la gaze métallique (1), les arêtes des bandes métalliques inclinées (4) présentes à ces endroits sont aplaties pour former des surfaces (8), qui sont parallèles aux plans principaux, où la gaze métallique (1) est soumise à un traitement d'étuvage pour la déformabilité plastique.

2. Matériau de couverture selon la revendication 1, où, au niveau des deux plans principaux de la gaze métallique (1), les arêtes des bandes métalliques inclinées (4) présentes à cet endroit sont aplaties pour former des surfaces qui sont parallèles aux plans principaux.

3. Matériau de couverture selon la revendication 1 ou 2, où le matériau bitumineux (21) est un bitume modifié par un SBS ou un SEBS.

4. Matériau de couverture selon la revendication 3, où la teneur en SBS ou SEBS est d'environ 10 à 30 % en poids.

5. Matériau de couverture selon la revendication 4, où la teneur en SBS ou SEBS est d'environ 20 % en poids.

6. Matériau de couverture selon l'une quelconque des revendications précédentes, où la gaze métallique (1) sur au moins une face est noyée au moins jusqu'à sa surface dans la matière bitumineuse (21).

7. Matériau de couverture selon la revendication 6, où la gaze métallique (1) sur au moins deux faces est noyée au moins jusqu'à sa surface dans la matière bitumineuse (21).

8. Matériau de couverture selon l'une quelconque des revendications précédentes, où une feuille est disposée sur au moins un des plans principaux, en particulier une feuille ayant des propriétés de résistance au feu, de résistance aux UV et/ou des propriétés colorantes.

9. Matériau de couverture selon l'une quelconque des revendications précédentes, où le matériau bitumineux (21) adhère étroitement à la gaze métallique (1), en particulier par moulage.

10. Matériau de couverture selon l'une quelconque des revendications précédentes, où la gaze métallique (1) se compose d'aluminium.
